## Europäisches Patentamt
## European Patent Office
## Office européen des brevets

(19)

(11) Publication number: **0 015 306**
**B1**

(12) **EUROPEAN PATENT SPECIFICATION**

(45) Date of publication of patent specification: **29.02.84**

(51) Int. Cl.³: **C 08 L 23/10, C 09 D 3/733**

(21) Application number: **79103873.0**

(22) Date of filing: **09.10.79**

(54) **Manufactured articles coated with olefinic polymers and process for their preparation.**

(30) Priority: **13.03.79 IT 2092579**

(43) Date of publication of application:
**17.09.80 Bulletin 80/19**

(45) Publication of the grant of the patent:
**29.02.84 Bulletin 84/9**

(84) Designated Contracting States:
**AT BE DE FR GB NL**

(56) References cited:
**FR - A - 2 389 486**
**US - A - 4 076 670**

The file contains technical information
submitted after the application was filed and not
included in this specification

(73) Proprietor: **Montedison S.p.A.**
**Patents & Licensing Dept. Foro Buonaparte, 31**
**P.O. Box 10528**
**I-20121 Milan (IT)**

(72) Inventor: **Marcaccioli, Enzo, Dr.**
**4/a, Via Amerigo Vespucci**
**Perugia (IT)**
Inventor: **Pizzo, Andrea**
**27, Via Comitato della Liberazione**
**Ferrara (IT)**
Inventor: **Spagnoli, Leonardo**
**12, Via del Lanificio**
**Terni (IT)**

(74) Representative: **Zumstein, Fritz sen., Dr. et al,**
**Dr. F. Zumstein sen. Dr. E. Assmann Dr. R.**
**Koenigsberger Dipl.-Ing. F. Klingseisen Dr. F.**
**Zumstein jun. Bräuhausstrasse 4**
**D-8000 München 2 (DE)**

Courier Press, Leamington Spa, England.

## Manufactured articles coated with olefinic polymers, process for their preparation and their use

The present invention concerns manufactured articles in the form of sheets coated with olefinic polymers, the process for their preparation and their use. More particularly, the invention relates to the coating of paper, aluminum, fabrics of either fibrillated or unfibrillated polyolefinic fabrics with the polyolefinic compositions of this invention.

In previous patents in the name of the same Applicant as well as of others, there have been described processes that consist in coating supports, essentially consisting of polyolefine films, with polyolefinic compositions, in order to make the films thermoweldable and impermeable.

The coating of paper, aluminum, fabrics of fibrillated or unfibrillated polyolefinic film, with mixtures of polyolefines, is however, quite difficult. As a matter of fact, if the coating of different supports by means of the extrusion-coating technique, is carried out using as a coating a polyolefinic mixture, the process is disturbed by irregularities in the flow of the molten coating material, irregularities that influence negatively the final characteristics of the product and considerably reduce the winding up speed of coated manufactured articles obtained as a continuous sheet.

We have now found, and this forms the object of this invention, that it is possible to obtain manufactured articles in the form of sheets, consisting of paper, aluminum, fabrics of polyolefinic films, either fibrillated or unfibrillated, coated with mixtures of polyolefines, by a process in which the previously described drawbacks do not occur. Operating according to the extrusion coating technique according to this invention, the flow of the molten coating material is regular, the winding up speed of the manufactured articles is rather high while the articles themselves display such characteristics as to be suited for use in numerous fields of use.

The supports used according to this invention consist of paper of the Kraft type, imitation parchment (parchment paper), glassine, aluminum sheets, optionally coupled with other different materials such as for instance paper and plastic films, fabrics made of polyolefinic films, either fibrillated or unfibrillated, obtained by either flat or tubular film extruding of polyolefines or mixtures thereof, possibly additioned with stabilizers, dyeing pigments, either organic or inorganic, lubricants, opacifiers, antistatic agents. The film-forming is followed by longitudinal drawing and cutting of the film by known methods.

The coatings according to this invention are obtained by using a composition consisting of:

a) a prevailingly isotactic propylene polymer or a propylene-ethylene copolymer of the "random" type, crystalline and containing up to 6% by weight of ethylene, or polymer mixtures containing prevailingly isotactic polypropylene obtained by polymerization in at least two stages, with stereospecific catalysts, of propylene and subsequently of ethylene and/or of an ethylene-propylene mixture, so as to obtain a polymerization product containing up to 20% b.w. of ethylene. In any case, the polyolefinic material has a melt index between 5 and 60, and is used in a proportion of 75%—99% by weight on the total weight of the composition,

b) a polymer of ethylene, having a density between 0.910 and 0.935, prepared with radical producing catalysts and showing a melt index between 1 and 10, or an ethylene-propylene copolymer of the amorphous type, having an ethylene content of 20%—50% and a melt index between 1 and 50, said compounds being used in a proportion of 1%—25% on the total weight of the mix.

c) an organic compound of the formula

$$A\text{---}S\text{---}B$$

wherein A and B, which may be equal to or different from each other, are aryl, alkyl, alkylaryl groups, at least one of the groups A and B being an aryl containing a hydroxyl group in position 2 or 4 with respect to S, and at least one alkyl group, either linear or branched. This organic sulphide is used in a proportion of 0.01%—0.2% b.w. on the total weight of the mix.

Particularly useful for the purpose are: 4,4'-thio-bis(6-tert.butyl-m.cresol) and (4-hydroxy-3,5-di-tert.-butylbenzyl(octadecylacetate)sulphide.

The above said organic sulphides have the function of regulating the flow of the molten polyolefinic coating material. Said sulphides allow a regular and fast flow of the molten polymer, during the extrusion-coating operation.

The manufactured articles according to this invention are prepared by means of known techniques, by the extrusion coating method. The use of mixes according to this invention allows regular flows of the molten coating material, high winding up speeds and good characteristics of the manufactured articles, and more particularly it makes it possible to obtain thin coatings with a uniform and constant thickness.

The products thus obtained, show high characteristics of impermeability to gases, vapors and oils, good thermowelding properties, and they find a use in the production of materials for packaging of either liquid, solid and powdery products and for foodstuffs.

# O 015 306

To the coating mixture according to this invention there may be added small quantites of stabilizers, opacifiers, plasticizers, organic and inorganic dyeing pigments, lubricants and antistatic agents.

The permeability to water vapour (steam) has been evaluated according to ASTM E 96 standards, the permeability to other gases according to ASTM D 1434 standards, both at 25°C.

There will now be given a set of examples to illustrate the invention.

Example 1

A coated manufactured article was prepared by extrusion on a Kraft type paper support, of a blend consisting of:

— granulated polypropylene, having a melt index of 15, a residue at the heptanic extraction of 97.3% and ashes content equal to 72 ppm, prepared by stereospecific polymerization of propylene: 47.5 Kg.
— granulated polyethylene, having a melt index of 4, a density equal to 0.918 and ashes equal to 48 ppm, prepared by polymerization of the ethylene with radical producing catalysts: 2.5 Kg.
— 4.4'-thiobis(6-tert.butyl-m-cresol), 0,05 Kg.

The support consists of Kraft type paper having a width of 30 cm and a weight of 60 g/sq.m. The extrusion of the coating blend or mixture on the support is carried out by means of conventional equipment, that is, of the type used for extrusion coating on an extruder with a flat nozzle, under the following operational conditions:

| | |
|---|---|
| — temperature of extrusion head (in °C) | 300 |
| — winding up speed of the coated manufactured article (in (m/min)) | 140 |

The manufactured article thus obtained showed the following characteristics:

| | |
|---|---|
| — thickness of the coating ($\mu$m): | 25.5 |
| — weight of the coating (g/sq.m): | 23 |
| — permeability to oxygen (cc/sq.m/24 hrs 1.01 · $10^5$ Pa): | 30 |
| — permeability to carbon dioxide (cc/sq.m/24 hrs 1.01 · $10^5$ Pa): | 130 |
| — permeability to water vapour (steam) (gr/sq.m/24 hrs): | 1 |
| — weldability range (in °C) | 130—135 |

and it proved particularly suited for use in the packing of oily products.

Example 2

A coated manufactured article was prepared by extrusion on a Kraft-type paper support, of a blend consisting of:

— polypropylene in granules, having a melt index equal to 15, a residue at the heptanic extraction=97.3%, ashes=72 ppm, prepared by stereospecific polymerization of the propylene: 44 Kg.
— granulated polyethylene, having a melt index equal to 4, a density of 0.918 and ashes equal to 48 ppm, prepared by polymerization of ethylene with radicalic producing catalysts: 6 Kg.
— 4,4'-thiobis(6-tert.butyl-m-cresol): 0.05 Kg.

The support consisted of Kraft-type paper, 30 cm wide and having a specific weight of 60 g/sq.m. The extrusion of the coating blend on the support is carried out on conventional equipment, that is, of the type used for extrusion coating, with an extruder with a flat nozzle, under the following working conditions:

| | |
|---|---|
| — temperature of extrusion head (°C): | 300 |
| — winding up speed of the coated article (m/min): | 200 |

The obtained manufacture article showed the following characteristics:

| | |
|---|---|
| — thickness of the coating ($\mu$m): | 7.5 |
| — weight of the coating (g/sq.m): | 6.7 |
| — permeability to oxygen (cc/sq.m/24 hrs 1.01 · $10^5$ Pa): | 35 |
| — permeability to carbon dioxide (cc/sq.m/24 hrs 1.01 · $10^5$ Pa): | 140 |
| — permeability to water vapour (g/sq.m/24 hrs): | 1.5 |
| — range of weldability (°C): | 125—130 |

and it proved particularly suited for use as material for heat-welded packages for holding products spoilable by moisture.

3

Example 3

There was prepared a coated manufactured article, by means of extrusion of a Kraft-type paper support of a mix consisting of:

— polypropylene in granules, having a melt index=15, a residue at the heptanic extraction equal to 97.3%, ashes equal to 72 ppm; prepared by stereospecific polymerization of the propylene, 37.5 kg.
— polyethylene in granules, having a melt index of 4, a density=0.918, ashes equal to 48 ppm; prepared by polymerization of the ethylene with radical producing catalysts, Kg. 12.5.
— 4,4'-thiobis(6-tert.butyl-m-cresol), Kg 0.05.

The support consisted of Kraft-type paper, 30 cm wide and with a specific weight of 60 g/sq.m. The extrusion of the coating mix onto the support is carried out by means of traditional devices of the type used for the extrusion coating, with an extruder with a flat nozzle, under the following working conditions:

— temperature of extrusion head (in °C): 292
— winding up speed of the coated manufactured article (in m/min): 210

The manufactured article thus obtained showed the following characteristics:

— thickness of coating ($\mu$m): 10.5
— weight of coating (g/sq.m): 9.5
— permeability to oxygen (cc/sq.m/24 hrs/$1.01 \cdot 10^5$ Pa): 30
— permeability to carbon dioxide (g/sq.m/24 hrs/$1.01 \cdot 10^5$ Pa): 130
— permeability to water vapor (g/sq.m/24 hrs): 1.2
— weldability range (in °C): 115—125

and it proved particularly suited for use as packaging material for foodstuffs that has to be subjected to sterilization at high temperatures.

Example 4

There was prepared a coated manufactured article, by extrusion onto Kraft-type paper support of a blend consisting of:

— polypropylene in granules, having a melt index of 14, a residue to heptanic extraction=97.6%, ashes equal to 67 ppm; prepared by stereospecific polymerization of the propylene: 45 kg.
— polyethylene in granules, having a melt index equal to 3, density equal to 0.921, ashes=51 ppm, prepared by polymerizing ethylene with radical producing catalysts, Kg 5.0.
— (4-hydroxy-3,5-di-t-butylbenzyl)(octadecylacetate) sulphide: 0.03 Kg.

The support consisted of Kraft-type paper, 120 cm wide and having a specific weight of 100 g/sq.m. The extrusion of the coating blend onto the support is carried out by means of conventional devices of the type used for the extrusion coating, with an extruder with a flat nozzle, under the following working conditions:

— temperature of extrusion head (in °C): 270
— winding up speed of coated article (m/min): 190

The manufactured article thus obtained showed the following characteristics:

— thickness of coating ($\mu$m): 15
— weight of coating (g.sq.m): 13.5
— permeability to oxygen (cc/sq.m/24 hrs $1.01 \cdot 10^5$ Pa): 35
— permeability to carbon dioxide (cc/sq.m/24 hrs $1.01 \cdot 10^5$ Pa): 140
— permeability to water vapor (g/sq.m/24 hours): 1.5
— weldability range (°C): 122—128

and it proved particularly suited for use in the foodstuff packaging field.

Example 5

There was prepared a coated manufactured article by extruding, on a support consisting of fabric of non-fibrillated polyolefinic film, a blend consisting of:

— polypropylene in granules, having a melt index=30, a residue at heptanic extraction equal to 96.9%, ashes equal to 63 ppm, and prepared by stereospecific polymerization of propylene, Kg 88.

4

— polyethylene in granules, having a melt index of 4, a density equal to 0.918, ashes equal to 48 ppm, and prepared by polymerizing ethylene with radical producing catalysts, Kg 12.

— 4,4'-thio-bis(6-tert.butyl-m-cresol), Kg 0.150.

The support consisted of a fabric of non-fibrillated polypropylenic film, prepared by weaving on a flat loom and showing a specific weight of 80 g/sq.m. It was obtained starting from a tubular film of polypropylene having a melt index of 2, a residue at heptanic extraction equal to 97.3%, ashes=55 ppm, stretched in a longitudinal direction with a stretch ratio=1:7, at a temperature of 140°C, in order to obtain a thickness of 30 $\mu$m.

The extrusion of the coating mix onto the support was carried out by means of conventional devices of the type used for extrusion coating, with the extruder having a flat nozzle, under the following operational conditions:

| | |
|---|---|
| — temperature of the extrusion head (°C): | 285 |
| — winding up speed of coated manufactured article (m/min): | 110 |

The manufactured article thus obtained showed the following characteristics:

| | |
|---|---|
| — thickness of coating ($\mu$m): | 24.5 |
| — weight of coating (g/sq.m): | 22 |
| — permeability to oxygen (cc/sq.m/24 hrs 1.01 · $10^5$ Pa): | 35 |
| — permeability to carbon dioxide (cc/sq.m/24 hrs 1.01 · $10^5$ Pa): | 145 |
| — weldability range (in °C): | 122—128 |

and it proved particularly suited for use as a material for the production of heat-welded or stitched bags for powdery chemicals.

Example 6

There was prepared a coated manufactured article by extruding on a support of fabric made of non-fibrillated polyolefinic film, of a coating mix consisting of:

— polypropylene in granules, having a melt index of 15, a residue at heptanic extraction equal to 97.3% and ashes equal to 72 ppm, prepared by stereospecific polymerization of the propylene, Kg 88.

— polyethylene in granules having a melt index of 4, a density equal to 0.918 and ashes=48 ppm, prepared by polymerization of ethylene with radical producing catalysts, Kg 12.

— 4,4'-thio-bis(6-tert.butyl-m-cresol), Kg 0.150.

The support consisted of a fabric of non-fibrillated polypropylene film, prepared by weaving on a tubular loom, and showing a specific weight of 70 g/sq.m and with a semi-circumference of 78.5 cm.

The extrusion of the coating mix onto the support is carried out by means of conventional equipment, of the type used for extrusion coating, under the following working conditions:

| | |
|---|---|
| — temperature of extrusion head (°C): | 305 |
| — winding up speed of the coated manufactured article (m/min): | 100 |

The manufactured article thus obtained showed the following characteristics:

| | |
|---|---|
| — thickness of the coating (in $\mu$m): | 20 |
| — weight of the coating (g/sq.m): | 18 |
| — permeability to oxygen (cc/sq.m/24 hrs 1.01 · $10^5$ Pa): | 35 |
| — permeability to carbon dioxide (cc/sq.m/24 hrs 1.01 · $10^5$ Pa): | 140 |
| — permeability to water vapor (g/sq.m/24 hrs): | 1 |
| — weldability range (in °C): | 125—130 |

and it proved particularly suited for use as a material for the production of bags for the transportation of chemical products and foodstuffs.

Example 7

There was prepared a coated manufactured article by extrusion on a support, made of a fabric of non-fibrillated polyolefinic film, of a blend consisting of:

— polypropylene in granules, having a melt index of 30, a residue at heptanic extraction equal to 96.9%, ashes equal to 63 ppm, prepared by stereospecific polymerization of propylene, Kg 88.

— polyethylene in granules, having a melt index=4, a density=0.918, ashes=48 ppm, prepared by polymerisation of ethylene with radical producing catalysts, Kg 12.

— (4-hydroxy-3,5-di-t-butylbenzyl)(octadecylacetate)sulphide, Kg 0.05.

The support consisted of a fabric of non-fibrillated polyolefinic film, prepared by weaving on a flat loom and showed a specific weight of: 60 g/sq.m.

The extrusion of the coating mix onto the support was carried out by means of conventional equipment of the type used for extrusion coating under the following operational conditions:

| | |
|---|---|
| — temperature of extrusion head (in °C): | 280 |
| — winding up speed of the coated manufactured article (m/min): | 105 |

The manufactured article thus obtained, showed the following characteristics:

| | |
|---|---|
| — thickness of the coating ($\mu$m): | 16.7 |
| — specific weight of the coating (g/sq.m): | 15 |
| — permeability to oxygen (cc/sq.m/24 hrs $1.01 \cdot 10^5$ Pa): | 35 |
| — permeability to carbon dioxide (cc/sq.m/24 hrs $1.01 \cdot 10^5$ Pa): | 145 |
| — permeability to water vapor (steam) (g/sq.m/24 hours): | 2 |
| — weldability range (in °C): | 122—128 |

and it proved particularly suited for use as impermeable sheet, very resistant for applications in agriculture.

Example 8

There was prepared a coated manufactured article, by extrusion on a support made of a fabric from non-fibrillated polyolefinic film, of a blend consisting of:

— polypropylene in flakes, having a melt index of 25, a residue at heptanic extraction equal to 97.9%, ashes equal to 37 ppm, prepared by stereospecific polymerization of the propylene, Kg 44.
— polyethylene in granules, having a melt index of 4, a density equal to 0.918 and ashes equal to 48 ppm, prepared by polymerization of the ethylene with radical producing catalysts; Kg 6.
— 4,4'-thio-bis(6-tert-butyl-m-cresol), Kg 0.05.

The support consisted of a fabric of non-fibrillated polyolefinic film, prepared by weaving on a tubular loom, and showed a specific weight of 80 g/sq.m and a semi-circumference of 78.5 cm.

The extrusion of the coating mix onto the support was carried out by means of conventional equipment, of the type used for extrusion coating, under the following operational conditions:

| | |
|---|---|
| — temperature of extrusion head (°C): | 310 |
| — winding up speed of the coated article (m/min): | 110 |

The manufactured article thus obtained, showed the following characteristics:

| | |
|---|---|
| — thickness of coating ($\mu$m): | 10 |
| — weight of coating (g/sq.m): | 9 |
| — permeability to oxygen (cc/sq.m/24 hrs $1.01 \cdot 10^5$ Pa): | 35 |
| — permeability to carbon dioxide (cc/sq.m/24 hrs $1.01 \cdot 10^5$ Pa): | 145 |
| — permeability to water vapor (steam) (g/sq.m/24 hrs): | 2 |
| — weldability range (°C): | 122—128 |

and it proved particularly suited for use as a material for producing bags for the packaging of powdery products or products suffering humidity.

Example 9

There was prepared a coated manufactured article by extrusion, on a support of Kraft-type paper, of a mix consisting of:

— Polyethylene in granules, having a melt index of 4, a density equal to 0.918 and ashes=48 ppm, prepared by polymerization of the ethylene with radical producing catalysts; Kg 6.
— crystalline, ethylene-propylene copolymer in granules, having the following percentage composition: ethylene=3.8%, melt index=12 and ashes=73 ppm; Kg 44.
— 4,4'-thio-bis(6-tert.butyl-m-cresol), Kg 0.05.

The support consisted of Kraft-type paper, 50 cm wide and having a specific weight of 50 g/sq.m. The extrusion of the coating mix onto the support, is carried out on conventional equipment, that is, of the type used for extrusion coating, under the following working conditions:

| | |
|---|---|
| — temperature of extrusion head (°C): | 300 |
| — winding up speed of coated article (m/min): | 180 |

The manufactured article thus obtained, showed the following characteristics:

— thickness of the coating ($\mu$m): 9.7
— weight of the coating (g/sq.m): 8.7
— permeability to oxygen (cc/sq.m/24 hrs 1.01 · 10⁵ Pa): 30
— permeability to carbon dioxide (cc/sq.m/24 hrs 1.01 · 10⁵ Pa): 140
— permeability to water vapor (steam) (g/sq.m/24 hrs): 1
— weldability range (°C): 122—126

and it proved particularly suited for the use as material for preparing welded bags for the packaging of foodstuffs to be stored in refrigerators.

Example 10
There was prepared a coated manufactured article, by means of extrusion on a support, consisting of a fabric of non-fibrillated polyolefinic film, of a mix consisting of:

— polyethylene in granules, having a melt index=4, density=0.918 and ashes equal to 48 ppm, prepared by polymerization of the ethylene with radical producing catalysts, Kg 6.
— a crystalline ethylene-propylene copolymer in flakes with ethylene=3.8%, melt index equal to 12 and ashes equal to 73 ppm; Kg 44.
— 4,4'-thio-bis(6-tert.butyl-m-cresol) Kg 0.075.

The support consisted of a fabric of non-fibrillated polyolefinic film, prepared by weaving on a flat loom and showing a specific weight of 60 g/sq.m.
The extrusion of the coating mix onto the support was carried out by means of conventional equipment of the type used for the extrusion coating, under the following working conditions:

— temperature of extrusion head (°C): 295
— winding up speed of coated article (m/min): 110

The manufactured article thus obtained showed the following characteristics:

— thickness of coating ($\mu$m): 8.5
— weight of coating (g/sq.m): 7.5
— permeability to oxygen (cc/sq.m/24 hrs 1.01 · 10⁵ Pa): 35
— permeability to carbon dioxide (cc/sq.m/24 hrs 1.01 · 10⁵ Pa): 140
— permeability to water vapor (steam (g/sq.m/24 hrs): 1
— weldability range (in °C): 120—125

and it proved to be particularly suitable for use as an impermeable sheet, particularly for the protection of materials suffering from atmospheric agents.

Example 11 (Comparative Ex.)
There was prepared a coated manufactured article, by extruding on a Kraft-type paper support, a coating mix of the following composition:

— polypropylene in granules, having a melt index=15, a residue at heptanic extraction=97.3% and ashes=72 ppm, prepared by stereospecific polymerization of the propylene; Kg 47.5.
— polyethylene in granules, having a melt index=4, a density=0.918 and ashes equal to 48 ppm, prepared by polymerizing the ethylene with radical producing catalysts, Kg 2.5.

The support consisted of Kraft-type paper, 30 cm wide and weighing 60 g/sq.m.
The extrusion of the coating mix onto the support was carried out on conventional equipment, that is of the type used for extrusion coating, under the following working conditions:

— temperature of extrusion head (°C): 300
— winding up speed of coated article (m/min): 40

The manufactured article thus obtained showed the following characteristics:

— thickness of coating ($\mu$m): 60
— specific weight of coating (g/sq.m): 50
— permeability to oxygen (cc/sq.m/24 hrs 1.01 · 10⁵ Pa): 30
— permeability to carbon dioxide (cc/sq.m/24 hrs 1.01 · 10⁵ Pa): 120
— permeability to water vapor (steam) (g/sq.m/24 hrs): 0.5
— weldability range (°C): 135—145

The low winding up speed allowed by this formulation, makes the process little suited for practical industrial application, while the rather high thickness of the coating makes this coupling unsuited for the applications indicated in the previous Examples.

Example 12 (Comparative)

There was prepared a coated manufactured article, by extruding on a support, consisting of a sheet of non-fibrillated polyolefinic film, a coating mixture consisting of:

— polypropylene in granules, having a melt index=30, a residue at heptanic extraction=96.9% and ashes=63 ppm, prepared by stereospecific polymerization of the propylene, Kg 88;
— polyethylene in granules, having a melt index=4, a density=0.918 and ashes=48 ppm, prepared by polymerization of the ethylene with radical producing catalysts; Kg 12.

The support consisted of a fabric made from non-fibrillated polyolefinic film, prepared by weaving on a flat loom, and showed a specific weight of 80 g/sq.m.

For preparing the fabric, polypropylene in granules, having a melt index=2, a residue at heptanic extraction=97.3% and ashes=55 ppm, was extruded as a flat film which was then stretched in a longitudinal direction, with a stretch ratio=1:7, at a temperature of 140°C, in order to obtain a 38 $\mu$m thick film which was then cut up into strips by passing the film on a bladed roller arranged on the loom.

The extrusion of the coating mix onto the support was carried out on conventional equipment, under the following operational conditions:

| | |
|---|---|
| — temperature of extrusion head (°C): | 280 |
| — winding up speed of coated article (m/min): | 35 |

The manufactured articled thus obtained showed the following characteristics:

| | |
|---|---|
| — thickness of coating ($\mu$m): | 35 |
| — specific weight of coating (g/sq.m): | 31.5 |
| — permeability to oxygen (cc/sq.m/24 hrs 1.01 · 10⁵ Pa): | 35 |
| — permeability to carbon dioxide (cc/sq.m/24 hrs 1.01 · 10⁵ Pa): | 125 |
| — permeability to water vapor (steam) (g/sq.m/24 hrs): | 0.5 |
| — weldability range (in °C): | 130—135 |

The low winding up speed allowed by this formulation, makes this process little suitable for a practical industrial application, while the considerable thickness of the coating makes this coupled product unsuited for the applications indicated in the previous examples.

**Claims**

1. Manufactured articles in the form of sheets, consisting of a support of paper, aluminum or fabrics of fibrillated or non-fibrillated polyolefinic films, coated with a composition consisting of:

a) from 75 to 99 parts by weight of a polypropylenic material of melt index between 5 and 60, consisting of a prevailingly isotactic polymer of propylene, or of a crystalline propylene-ethylene copolymer of the "random" type containing up to 6% by weight of ethylene, or of polymeric mixtures containing prevailingly isotactic polypropylene, obtained by polymerizing in at least two stages with stereospecific catalysts propylene and subsequently ethylene and/or an ethylene-propylene mixture, so as to obtain a polymerization product containing up to 20% by weight of ethylene,
b) from 1 to 25 parts b.w. of polyethylene having a density between 0.910 and 0.935, prepared with radical producing catalysts, having a melt index between 1 and 10, or of an ethylene-propylene copolymer of the amorphous type, having an ethylene content of 20%—50% and a melt index between 1 and 50,
c) from 0.01 to 0.2 parts b.w. on 100 parts total mix of an organic sulphide of formula: A—S—B wherein A and B, which may be equal to or different from each other, are aryl, alkyl or alkylaryl groups, at least one of the groups A and B being an aryl containing a hydroxyl group in position 2 or 4 with respect to S, and at least one linear or branched alkyl group.

2. Coated manufactured articles according to claim 1, characterized in that there is used a coating composition containing 4,4′-thio-bis(6-tert.butyl-m-cresol).

3. Coated manufactured articles according to claim 1, characterized in that there is used a coating composition containing (4-hydroxy-3,5-di-tert.butyl-benzyl)(octadecylacetate) sulphide.

4. Coated manufactured articles according to claim 1, characterized in that the supports are Kraft-type papers, imitation parchment or glassine.

8

# 0 015 306

5. Coated manufactured articles, according to claim 1, characterized in that the supports are aluminum sheets, optionally coupled to different other materials such as paper and plastic films.

6. Coated manufactured articles according to claim 1, characterized in that the supports are fabrics made of either flat or tubular films, obtained through film-extruding prevailingly isotactic polypropylene, polyethylene, crystalline ethylene-propylene copolymers with a prevailing content of propylene.

7. Process for the preparation of coated manufactured articles according to claim 1, consisting in applying to the support the coating composition in a molten state, using the extrusion coating method.

8. Use of the manufactured articles according to any one of claims 1 to 6 in the production of materials for packaging.

## Revendications

1. Articles manufacturés sous la forme de feuilles, constitués d'un support de papier, d'aluminium ou de tissu de film polyoléfinique, fibrillé ou non fibrillé, revêtus ou enduits d'une composition constituée de

a.—de 75 à 99 parties en poids d'un matériau polypropylénique ayant un indice de fusion entre 5 et 60, constitué d'un polymère en majorité isotactique de propylène ou d'un copolymère propylène-éthylène cristallin, du type "statistique" contenant jusqu'à 6% en poids d'éthylène, ou de mélanges polymères contenant en majorité du polypropylène isotactique, obtenus par polymérisation en au moins deux étapes en présence de catalyseurs stéréospécifiques, de propylène et ensuite d'éthylène et/ou d'un mélange éthylène-propylène, de façon à obtenir un produit de polymérisation contenant jusqu'à 20% en poids d'éthylène;

b.—de 1 à 25 parties en poids de polyéthylène ayant une densité entre 0,910 et 0,935, préparé en présence de catalyseurs radicalaires, ayant un indice de fusion entre 1 et 10 ou d'un copolymère éthyléne-propylène, du type amorphe, avent une teneur en éthylène de 20—50% et un indice de fusion entre 1 et 50;

c.—de 0,01 à 0,2 parties en poids sur un mélange total de 100 parties d'un sulfure organique de formule: A—S—B dans laquelle A et B qui peuvent être égaux on différents l'une de l'autre représentent des groupes aryles alkyles ou alkylaryles, au moins l'un des groupes A et B étant un aryle contenant un groupe hydroxyle en position 2 ou 4 par rapport au soufre et au moins un groupe alkyle linéaire ou ramifié.

2. Articles manufacturés revêtus ou enduits suivant la revendication 1, caractérisés en ce que l'on utilise une composition de revêtement ou d'enduction contenant du 4,4'-thiobis(6-tert.butyl-m-crésol).

2. Articles manufacturés revêtus ou enduits suivant la revendication 1, caractérisés en ce que l'on utilise une composition de revêtement ou d'enduction contenant du 4,4'-thiobis(6-tert.butyl-m-crésol).

3. Articles manufacturés revêtus ou enduits suivant la revendication 1, caractérisés en ce que l'on utilise une composition de revêtement ou d'enduction contenant du sulfure de (4-hydroxy-3,5-di-tert.butyl-benzyl)(actadécylacétate).

4. Articles manufacturés revêtus ou enduits suivant la revendication 1, caractérisés en ce que les supports sont des papiers du type papier kraft, du simili parchemin ou des feuilles transparentes.

5. Articles manufacturés revêtus ou enduits suivant la revendication 1, caractérisés en ce que les supports sont des feuilles d'aluminium, éventuellement associées à divers autres matériaux tels que des films de papier et de plastique.

6. Articles manufacturés revêtus ou enduits suivant la revendication 1, caractérisés en ce que les supports sont des tissus faits à partir de films plats ou tubulaires, obtenus par extrusion en film d'un polypropylène en majorité isotactique, de polyéthylène, de copolymères éthylène-propylène cristallins ayant une teneur en majorité de propylène.

7. Procédé de préparation d'articles manufacturés revêtus ou enduits suivant la revendication 1, consistant à appliquer au support la composition de revêtement ou d'enduction à l'état fondu en utilisant la méthode de revêtement ou d'enduction par extrusion.

8. Utilisation des articles manufacturés suivant l'une quelconque des revendications 1 à 6, à la production de matériaux pour emballages.

## Patentansprüche

1. Erzeugnisse in Form von Folien, bestehend aus einem Träger aus Papier, Aluminium oder Geweben aus faserigen oder nicht-faserigen Polyolefinfilmen, überzogen bzw. beschichtet mit einer Zusammensetzung aus

a) 75 bis 99 Gewichtsteilen eines Polypropylenmaterials mit einem Schmelzindex zwischen 5 und 60, bestehend aus einem überwiegend isotaktischen Propylenpolymeren oder einem kristallinen Propylen-Äthylen-Copolymeren vom Randomtyp, enthaltend bis zu 6 Gew.-% Äthylen, oder aus polymeren Mischungen, enthaltend überwiegend isotaktisches Polypropylen, erhalten durch Polymerisation in zumindest zwei Stufen mit stereospezifischen Katalysatoren von Propylen und anschließend Äthylen und/oder einer Äthylen-Propylen-Mischung, um ein Polymerisationsprodukt zu erhalten, das bis zu 20 Gew.-% Äthylen enthält,

b) 1 bis 25 Gewichtsteilen Polyäthylen mit einer Dichte zwischen 0,910 und 0,935, hergestellt mit Radikale bildenden Katalysatoren, mit einem Schmelzindex zwischen 1 und 10 oder eines Äthylen-Propylen-Copolymeren vom amorphen Typ mit einem Äthylengehalt von 20—50% und einem Schmelzindex zwischen 1 und 50,

c) 0,01 bis 0,2 Gewichtsteilen, bezogen auf 100 Teile Gesamtmischung, eines organischen Sulfids der Formel A—S—B, worin A und B, die gleich oder verschieden sein können, Aryl-, Alkyl- oder Alkarylgruppen sind, wobei zumindest eine der Gruppen A und B eine Arylgruppe mit einer Hydroxylgruppe in 2- oder 4-Stellung im Hinblick auf den Schwefel und zumindest einer linearen oder verzweigten Alkylgruppe ist.

2. Beschichtete Erzeugnisse gemäß Anspruch 1, dadurch gekennzeichnet, daß man eine Überzugszusammensetzung verwendet, die 4,4'-Thiobis-(6-tert.butyl-m-cresol) enthält.

3. Beschichtete Erzeugnisse gemäß Anspruch 1, dadurch gekennzeichnet, daß man eine Überzugszusammensetzung verwendet, die (4-Hydroxy-3,5-di-tert.butyl-benzyl)-(octadecylacetat)sulfid enthält.

4. Beschichtete Erzeugnisse gemäß Anspruch 1, dadurch gekennzeichnet, daß die Träger Papiere vom Kraft-Typ, Imitationspergament oder Glassin sind.

5. Beschichtete Erzeugnisse gemäß Anspruch 1, dadurch gekennzeichnet, daß die Träger Aluminiumfolien, die gegebenenfalls mit verschiedenen anderen Materialien wie Papier und Kunststoffilmen verbunden sind, sind.

6. Beschichtete Erzeugnisse gemäß Anspruch 1, dadurch gekennzeichnet, daß die Träger Gewebe aus entweder flachen oder röhrenförmigen Filmen sind, die erhalten wurden durch Filmextrudierung von überwiegend isotaktischem Polypropylen, Polyäthylen, kristallinen Äthylen-Propylen-Copolymeren mit einem überwiegenden Anteil an Propylen.

7. Verfahren zur Herstellung von beschichteten Erzeugnizzen gemäß Anspruch 1, dadurch gekennzeichnet, daß man auf den Träger die Überzugszusammensetzung in geschmolzenem Zustand unter Verwendun der Extruderbeschichtungsmethode aufbringt.

8. Verwendung der Erzeugnisse gemäß einem der Ansprüche 1—6 bei der Herstellung von Verpackungsmaterialien.